(19) Europäisches Patentamt
European Patent Office
Office européen des brevets

(11) **EP 3 944 439 A1**

(12) **DEMANDE DE BREVET EUROPEEN**

(43) Date de publication:
**26.01.2022 Bulletin 2022/04**

(21) Numéro de dépôt: **21186689.2**

(22) Date de dépôt: **20.07.2021**

(51) Classification Internationale des Brevets (IPC):
***H02H 3/04*** *(2006.01)*

(52) Classification Coopérative des Brevets (CPC):
**H02H 3/042;** H02H 9/04

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **21.07.2020 FR 2007669**

(71) Demandeur: **Schneider Electric Industries SAS
92500 Rueil-Malmaison (FR)**

(72) Inventeurs:
- **TIAN, Simon
  38320 EYBENS (FR)**
- **LI, XiaoDong-Mike
  SHANGHAI (CN)**

(74) Mandataire: **Lavoix
62, rue de Bonnel
69448 Lyon Cedex 03 (FR)**

(54) **PROCÉDÉ DE DIAGNOSTIC D'UN DISPOSITIF DE PROTECTION, TEL QU'UN PARAFOUDRE, ET DISPOSITIF DE PROTECTION POUR LA MISE EN OEUVRE D'UN TEL PROCÉDÉ**

(57) Procédé de diagnostic d'un dispositif de protection comprenant une ou plusieurs varistances, chacune configurée pour limiter les surtensions aux bornes de cette varistance surtensions lorsqu'une tension électrique aux bornes de cette varistance dépasse une tension d'écrêtage. Le procédé comprend des étapes consistant à :
- mesurer (100) une grandeur électrique associée à cette varistance, détecter un événement de surtension, mesurer une durée globale de cet événement ;
- calculer (102) une surtension équivalente comme étant la valeur absolue d'une différence entre la tension d'écrêtage et un pic de tension théorique en l'absence de dispositif de protection, et
- évaluer (104) un taux d'endommagement lié à l'événement de surtension, à partir des valeurs de la surtension équivalente, de la durée globale de l'événement de surtension, ainsi qu'à l'aide d'une première fonction caractéristique reliant de manière bijective une durée de vie de cette varistance à la surtension équivalente, la première fonction caractéristique étant préalablement enregistrée dans le dispositif électronique de supervision.

FIG.1

EP 3 944 439 A1

**Description**

La présente invention concerne un procédé de diagnostic d'un dispositif de protection, tel qu'un parafoudre, et un dispositif de protection pour la mise en œuvre d'un tel procédé.

Les dispositifs de protection, appelés aussi parafoudres ou *Surge Protection Devices* - SPD - en anglais, sont largement utilisés pour protéger les appareils électriques ou les infrastructures électriques sensibles contre les surintensités et/ou les surtensions de la ligne d'alimentation de ces appareils ou infrastructures. Dans le cadre de la présente description, les surintensités, dites aussi « *surge current*» en anglais, désignent des événements qui surviennent par exemple au cours des orages lorsque la foudre tombe et génère une impulsion de courant sur la ligne d'alimentation, l'impulsion de courant pouvant atteindre une valeur très élevée, par exemple de l'ordre de 15 kA, pendant une durée très courte, de l'ordre de quelques microsecondes, par exemple de l'ordre de 20 $\mu$s. Les surtensions, dites aussi « *temporary over-voltage* », ou TOV en anglais, désignent des événements qui surviennent par exemple lors d'incidents du réseau d'alimentation électrique tels qu'un défaut de transformateur, pendant une durée globale comparativement plus longue que les surintensités, par exemple de l'ordre de 20 ms. Un dispositif de protection est en général branché entre chaque phase électrique et le neutre de la ligne d'alimentation de l'appareil électrique à protéger. En cas de surtension, le dispositif de protection limite la tension à une tension d'écrêtage caractéristique du dispositif de surtension, un courant de fuite circulant au travers du dispositif de protection. En cas de surintensité, le dispositif de protection absorbe l'impulsion de courant en laissant passer le courant électrique excédentaire vers le neutre.

Or, à chaque fois que le dispositif de protection est sollicité et qu'un courant électrique traverse le dispositif de protection, certains éléments du dispositif de protection subissent des dommages. À mesure que l'endommagement progresse, la capacité du dispositif de protection à limiter des surtensions ou absorber des impulsions de courant futures se réduit. Autrement dit, la durée de vie restante du dispositif de protection se réduit. Un dispositif de protection avec une durée de vie résiduelle trop courte doit faire l'objet d'une maintenance ou être remplacé.

EP-3 217 502-A1 décrit un dispositif de protection et une méthode de diagnostic permettant d'évaluer une réduction de durée de vie de ce dispositif liée aux surintensités. Une telle méthode ne prend cependant pas en compte certains phénomènes d'usure, et de ce fait peut, dans certaines circonstances, donner une vue erronée de la durée de vie restante du dispositif de protection.

US-2007/188962-A1 décrit, par exemple, une méthode d'évaluation de la réduction de la durée de vie d'une varistance en lien avec des pics de surtensions subis par cette varistance, chacun des pics ayant une durée très brève, inférieure à 20 $\mu$s. La valeur et la durée de chaque pic de surtension sont mesurées, en amont de la varistance, au moyen d'un dispositif de mesure spécifique.

C'est à ces problèmes qu'entend plus particulièrement remédier l'invention, en proposant une méthode de diagnostic permettant d'évaluer la durée de vie d'un dispositif de protection de façon plus précise.

À cet effet, l'invention concerne un procédé de diagnostic d'un dispositif de protection, tel qu'un parafoudre, assurant la protection d'un appareil électrique connecté à une ligne d'alimentation, le dispositif de protection comprenant une ou plusieurs varistances, chaque varistance étant associée à une phase respective de la ligne d'alimentation et étant configurée pour limiter les surtensions lorsqu'une tension électrique aux bornes de cette varistance dépasse une tension d'écrêtage, le dispositif de protection comprenant aussi des capteurs de grandeurs électriques, qui mesurent des grandeurs électriques associées à chaque varistance et qui sont reliés à un dispositif électronique de supervision. Selon l'invention, que le procédé comprend, pour au moins une des varistances, des étapes consistant à :

- mesurer une grandeur électrique associée à cette varistance, détecter un évènement de surtension, mesurer une durée globale de l'événement de surtension,
- calculer une surtension équivalente comme étant la valeur absolue d'une différence entre la tension d'écrêtage et un pic de tension théorique en l'absence de dispositif de protection, et
- évaluer un taux d'endommagement lié à l'événement de surtension, à partir des valeurs de la surtension équivalente et de la durée globale de l'événement de surtension, ainsi qu'à l'aide d'une première fonction caractéristique reliant de manière bijective une durée de vie de cette varistance à la surtension équivalente, la première fonction caractéristique étant préalablement enregistrée dans le dispositif électronique de supervision.

Grâce à l'invention, il est possible d'évaluer l'endommagement lié à chaque événement de surtension, et donc d'évaluer la durée de vie restante du dispositif de protection en lien avec chaque événement de surtension. La durée de vie restante est plus réaliste car elle tient compte de l'endommagement lié aux surtensions. Le procédé est d'autre part facile à implémenter, ne nécessitant que des mesures des grandeurs électriques associées à chaque varistance, et permet d'informer un utilisateur pour, par exemple, planifier une maintenance.

Selon des aspects avantageux mais non obligatoires de l'invention, un tel procédé de diagnostic peut incorporer une ou plusieurs des caractéristiques suivantes prises isolément ou selon toute combinaison techniquement admissible :

- les capteurs de grandeurs électriques du dispositif de protection comprennent des capteurs de tension, qui mesurent une tension électrique associée à chaque varistance, alors que, à l'étape de mesure, on détecte un événement de surtension lorsque la tension électrique dépasse la tension d'écrêtage.
- L'étape de calcul de la surtension équivalente utilise la formule suivante :

$$\Delta U = Uv \cdot \left( \frac{1}{sin[\omega \cdot (t_1 - t_0)]} - 1 \right)$$

dans laquelle Uv est la tension d'écrêtage, $\omega$ est une pulsation du signal de tension de la ligne d'alimentation, t0 est un instant du dernier zéro du signal de tension avant l'événement de surtension et t1 est un instant de début de l'événement de surtension.
- Au cours de l'étape de mesure de la grandeur électrique associée à la varistance, on mesure une durée de pic de l'événement de surtension, alors que l'étape de calcul de la surtension équivalente utilise la formule suivante :

$$\Delta U = Uv \cdot \left( \frac{1}{\cos\left[\omega \cdot \frac{\Delta t_U}{2}\right]} - 1 \right)$$

dans laquelle Uv est la tension d'écrêtage et $\omega$ est une pulsation du signal de tension de la ligne d'alimentation.
- Le procédé de diagnostic comprend une étape qui consiste, lorsque plusieurs événements de surtensions sont détectés pour une même varistance, à évaluer un taux d'endommagement total associé à cette varistance, le taux d'endommagement total étant calculé à partir des taux d'endommagement associés à chacun des événements de surtension, et à en déduire une durée de vie restante de cette varistance.
- Les varistances sont aussi configurées pour absorber des impulsions de courant, les capteurs de grandeur électrique du dispositif de protection comprenant des capteurs de courant, qui sont configurés pour mesurer un courant électrique circulant au travers de chaque varistance, le procédé de diagnostic comprenant des étapes successives, antérieures à l'étape d'évaluation du taux d'endommagement total et consistant à, pour chaque varistance :

  • mesurer un courant électrique traversant cette varistance et détecter un événement de surintensité, mesurer une durée d'impulsion de cet événement de surintensité,
  • calculer une valeur d'intensité de pic,
  • évaluer un taux d'endommagement lié à cet événement de surintensité, à partir de l'intensité de pic, de la durée d'impulsion de l'événement de surintensité et à l'aide d'une deuxième fonction caractéristique préalablement enregistrée dans le dispositif électronique de supervision, la deuxième fonction caractéristique reliant intensité de pic, durée d'impulsion et durée de vie de cette varistance,

  alors qu'à l'étape d'évaluation du taux d'endommagement total de chaque varistance, le dispositif électronique de supervision évalue la durée de vie restante RL de cette varistance en tenant compte du taux d'endommagement total associé aux événements de surtension et d'un taux d'endommagement total associé aux événements de surintensité détectés pour cette varistance.
- La ligne d'alimentation est polyphasée, notamment triphasée, le dispositif de protection comprenant plusieurs varistances, chacune associée à une phase respective de la ligne d'alimentation, alors que le procédé comprend une étape consistant à comparer de la durée de vie restante de chacune des varistances, et à en déduire une durée de vie restante du dispositif de protection comme étant égale à une plus petite durée de vie restante parmi les durées de vies restantes respectives des varistances.

L'invention concerne aussi un dispositif de protection configuré pour assurer la protection d'un appareil électrique connecté à une ligne d'alimentation avec au moins une phase électrique, le dispositif de protection comprenant, pour chaque phase de la ligne d'alimentation, une varistance configurée pour limiter les surtensions, des capteurs de grandeur électrique pour mesurer des grandeurs électriques associées à chaque varistance et un dispositif électronique de supervision relié aux capteurs de grandeurs électriques, alors que le dispositif de protection est configuré pour mettre en œuvre un procédé comprenant les étapes consistant à :

- mesurer une grandeur électrique associée à la varistance, détecter un évènement de surtension et en déduire une durée globale de l'événement de surtension ;
- calculer une surtension équivalente comme étant la valeur absolue de la différence entre la tension d'écrêtage et le pic de tension théorique en l'absence de dispositif de protection, et

- évaluer un taux d'endommagement lié à l'événement de surtension, à partir de la surtension équivalente et de la durée globale de l'événement de surtension et à l'aide d'une première fonction caractéristique reliant de manière bijective la durée de vie à la surtension équivalente, la première fonction étant préalablement enregistrée dans le dispositif électronique de supervision.

Avantageusement :

- les varistances sont aussi configurées pour absorber les impulsions de courant, les capteurs de grandeurs électriques du dispositif de protection comprenant aussi des capteurs de courant pour mesurer un courant électrique traversant chaque varistance, alors que le dispositif de protection est configuré pour mettre en œuvre les étapes consistant à, pour chaque varistance :

  • mesurer un courant électrique traversant cette varistance, détecter un événement de surintensité et mesurer une durée d'impulsion de cet événement de surintensité,
  • calculer une valeur d'intensité de pic,
  • évaluer un taux d'endommagement lié à cet événement de surintensité, à partir des valeurs de l'intensité de pic et de la durée d'impulsion de l'événement de surintensité et à l'aide d'une deuxième fonction caractéristique, préalablement enregistrée dans le dispositif électronique de supervision, reliant intensité de pic, durée d'impulsion et durée de vie de la varistance.

- Chaque varistance est réalisée en un matériau céramique à base d'oxyde métallique, notamment à base d'oxyde de zinc.

Ce dispositif de protection induit les mêmes avantages que ceux mentionnés ci-dessus au sujet du procédé de l'invention.

L'invention sera mieux comprise, et d'autres avantages de celle-ci apparaîtront plus clairement à la lumière de la description qui va suivre, d'un mode de réalisation d'un procédé de diagnostic d'un dispositif de protection et d'un dispositif de protection pour la mise en œuvre d'un tel procédé conformes à son principe, donnée uniquement à titre d'exemple et faite en référence aux dessins annexés, dans lesquels :

- [Fig 1] la figure 1 est une vue schématique d'un dispositif de protection conforme à l'invention ;
- [Fig 2] la figure 2 est un graphe illustrant un test d'endurance réalisé sur un composant appartenant au dispositif de protection de la figure 1 ;
- [Fig 3] la figure 3 est un graphe représentant une synthèse des résultats de plusieurs tests d'endurance similaires à celui de la figure 2 ;
- [Fig 4] la figure 4 est un graphe représentant des mesures de grandeur électrique aux bornes du composant du dispositif de protection de la figure 1, au cours d'un événement de surtension, et
- [Fig 5] la figure 5 est un diagramme représentant des étapes d'un procédé de diagnostic du dispositif de protection de la figure 1 conforme à l'invention.

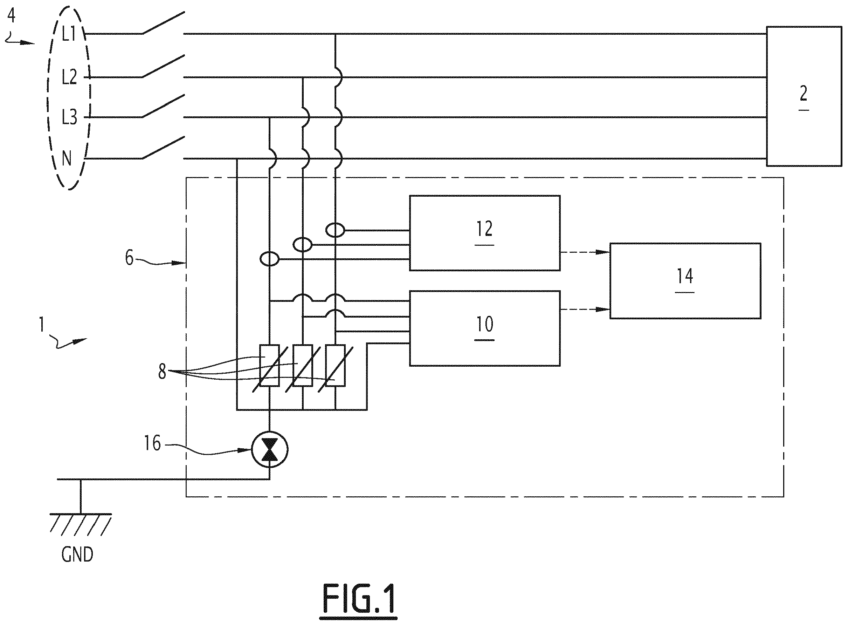

Une installation électrique 1 est représentée sur la figure 1. L'installation électrique 1 comprend un appareil électrique 2 relié à une source d'alimentation en énergie électrique, non représentée, par l'intermédiaire d'une ligne d'alimentation 4. Dans l'exemple de la figure 1, la source d'alimentation est triphasée, et la ligne d'alimentation 4 comprend trois fils L1, L2 et L3, chacun associé à une phase respective de la source d'alimentation, et un fil neutre N. L'appareil électrique 2 est par exemple un appareil électronique.

L'installation électrique 1 comprend aussi un dispositif de protection 6, qui est monté en dérivation entre la ligne d'alimentation 4 et une masse GND.

Le dispositif de protection 6, aussi appelé parafoudre, sert à protéger l'appareil électrique 2 des surtensions et surintensités qui pourraient transiter par la ligne d'alimentation 4 et endommager l'appareil électrique 2. Le dispositif de protection 6 est généralement contenu dans un boitier, représenté schématiquement par un rectangle en traits mixtes.

Pour chacun des fils L1 à L3 de la ligne d'alimentation 4, le dispositif de protection 6 comprend une varistance 8 intercalée entre un fil L1 à L3 respectif et le neutre N. Le neutre N est ici relié à la masse GND par l'intermédiaire d'un écrêteur à gaz 16. Une varistance 8 est un composant électrique dont le matériau est normalement isolant pour une tension électrique inférieure à une tension d'écrêtage Uv, le matériau devenant conducteur lorsque la tension dépasse la tension d'écrêtage Uv. En cas de surintensité, une onde de choc électrique circule sur l'un des fils L1 à L3 et est absorbée par la varistance 8 correspondante.

De façon schématique, l'énergie électrique excédentaire est ainsi redirigée au travers de la varistance 8 vers le neutre N plutôt que vers l'appareil électrique 2.

Une varistance 8 est par exemple composée d'un matériau de type céramique à base d'oxydes métalliques, notamment à base d'oxyde de zinc ZnO, mises en forme sous forme de bloc notamment par frittage de poudre. La tension d'écrêtage Uv est caractéristique de la varistance 8 et dépend notamment de la nature du matériau utilisé, de la géométrie de la varistance 8, des paramètres de frittage, etc.

Les varistances 8 du dispositif de protection 6 fonctionnent avantageusement de la même façon, et sont de préférences identiques l'une à l'autre. En particulier, les varistances 8 présentent une même tension d'écrêtage Uv.

Ce qui est expliqué dans la suite est ainsi valable quel que soit le nombre de phases de la ligne d'alimentation 4, le dispositif de protection 6 comprenant autant de varistances 8 que la source d'alimentation comprend de phases, une varistance 8 étant intercalée entre chaque phase et le neutre N. Autrement dit, le dispositif de protection 6 comprend une ou plusieurs varistances 8, chacune associée à une phase L1 à L3 de la ligne d'alimentation 4.

Le dispositif de protection 6 comprend des capteurs de grandeurs électriques, qui mesurent des grandeurs électriques associées à chaque varistance 8. Les capteurs de grandeurs électriques incluent des capteurs de tension 10, configurés pour mesurer une tension électrique associée à chaque varistance 8, et/ou des capteurs de courant 12, par exemple des capteurs de courant de type Rogowski ici représentés schématiquement par des boucles, configurés pour mesurer un courant électrique circulant au travers de chaque varistance 8.

Le dispositif de protection 6 comprend aussi un dispositif électronique de supervision 14, qui est relié aux capteurs de grandeurs électriques, c'est-à-dire relié aux capteurs de tension 10 et aux capteurs de courant 12. Le dispositif électronique de supervision 14 est ainsi configuré pour recevoir les mesures de tension et de courant en provenance des capteurs de tension 10 et de courant 12 et pour enregistrer les valeurs de ces mesures de tension et de courant.

Le dispositif électronique de supervision 14 est généralement implémenté par un ou plusieurs circuits électroniques.

Par exemple, le dispositif électronique de supervision 14 comporte un processeur, tel qu'un microcontrôleur programmable ou un microprocesseur, et une mémoire informatique, ou tout support d'enregistrement de données lisible par ordinateur.

Selon des exemples, la mémoire est une mémoire ROM, ou une mémoire RAM, ou une mémoire non volatile du type EPROM ou Flash ou équivalent. La mémoire comporte des instructions exécutables et/ou du code informatique pour assurer le fonctionnement du dispositif électronique de supervision 14 conformément à un ou plusieurs des modes de réalisation décrits ci-après lorsqu'exécutés par le processeur.

Selon des variantes, le dispositif électronique de supervision 14 peut comporter un processeur de traitement du signal - dit aussi « *digital signal processor* », ou DSP en anglais -, ou un composant logique reprogrammable - dit aussi « *field-programmable gate array*», ou FGPA en anglais-, ou un circuit intégré spécialisé - dit aussi « *application-specific integrated circuit* », ou ASIC en anglais -, ou tout élément équivalent.

On s'intéresse à présent au fonctionnement d'une varistance 8, et plus particulièrement à l'endommagement subit par une varistance 8 au cours d'un événement de surtension.

Chaque fois qu'une varistance 8 écrête une surtension dépassant la tension d'écrêtage Uv ou absorbe une impulsion de courant, le passage d'un courant électrique entraine une dégradation du matériau constitutif de la varistance 8. Ainsi, chaque événement de surtension ou de surintensité endommage la varistance 8, et la capacité de cette varistance 8 à écrêter de futures surtensions ou absorber de futures impulsions de courant, autrement dit sa durée de vie restante, est réduite.

Alors que les événements de surintensités sont généralement causés lors d'orages, les événements de surtension sont généralement causés par des défauts de la source d'alimentation, par exemple des erreurs humaines liées à la gestion du réseau d'électricité ou des défauts de transformateur. À titre d'exemple, une source d'alimentation en triphasé à 50 Hz et délivrant normalement une tension avec une amplitude de 380 V peut, de façon temporaire pendant plusieurs périodes consécutives, présenter des pics de tension à 550 V. Une surtension, aussi appelé « *Temporary Over Voltage* » - ou TOV - en anglais, présente une forme de signal sinusoïdal, à la même fréquence que la source d'alimentation, soit ici 50 Hz, avec une amplitude dépassant la tension normale de la source d'alimentation.

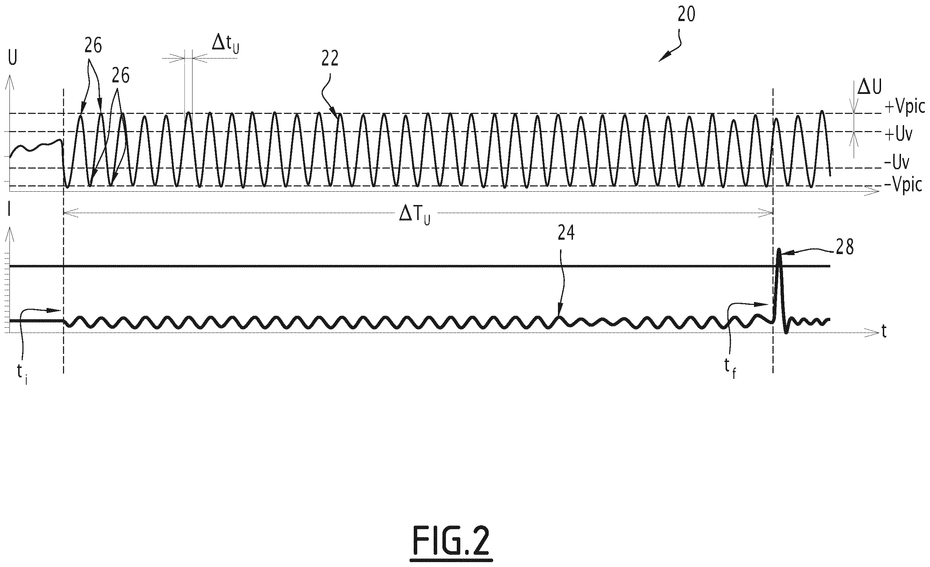

La figure 2 représente un graphe 20, illustrant un test d'endurance d'une varistance 8, dont la tension d'écrêtage Uv est ici de 385 V. Une tension d'alimentation U sinusoïdale, représentée par une courbe 22, est imposée aux bornes de la varistance 8. La tension d'alimentation U présente un pic de tension $V_{PIC}$ supérieur à la tension d'écrêtage Uv. Le pic de tension $V_{PIC}$ est ici égal à 550 V. Un courant I traversant cette varistance 8 est mesuré et représenté par une courbe 24.

On définit un événement de surtension 26 comme étant un intervalle de temps au cours duquel la tension d'alimentation U est supérieure, en valeur absolue, à la tension d'écrêtage Uv. Chaque événement de surtension 26 présente une durée dite « de pic » $\Delta t_U$. La durée de pic $\Delta t_U$ est donc plus courte qu'une demi-période de la tension d'alimentation U.

Pour chaque événement de surtension, on définit aussi une surtension équivalente $\Delta U$ comme étant égale à la valeur absolue de la différence entre la tension d'écrêtage Uv et le pic de tension $V_{PIC}$. Autrement dit, $\Delta U = | Uv-V_{PIC} |$ Pendant le test d'endurance, chaque événement de surtension 26 est ainsi caractérisé par une durée de pic $\Delta t_U$ constante et une surtension équivalente $\Delta U$ constante.

La tension d'alimentation U est appliquée à partir d'un temps initial $t_i$. Ainsi, à chaque demi-période, on a un événement de surtension 26 présentant un pic de tension $V_{PIC}$ de 550 V constant, une durée de pic $\Delta t_U$ constante et une surtension équivalente $\Delta U = | 385 - 550 | = 165$ V constante.

Lors de chaque événement de surtension 26, pendant la durée de pic $\Delta t_U$ que dure cet événement 26, un courant I de fuite, non nul, traverse la varistance 8 et endommage progressivement le matériau de la varistance 8. Dans l'exemple illustré, le courant I de fuite présente une amplitude de l'ordre de 300 mA.

À l'issue de chaque événement de surtension 26, l'endommagement de la varistance 8 progresse d'une quantité considérée comme constante, puisque chaque événement de surtension 26 présente une même durée de pic $\Delta t_U$ et une même surtension équivalente $\Delta U$. Lorsque l'endommagement atteint un taux de 100%, la varistance 8 ne peut plus absorber d'énergie électrique.

Dans les conditions du test d'endurance illustré sur la figure 2, le courant I de fuite présente, au bout de soixante-cinq événements de surtension 26, un pic 28 de courant de fuite dont l'amplitude atteint 250 A, ce qui illustre le fait que l'endommagement de la varistance 8 atteint un taux de 100 % au bout de soixante-cinq fois la durée de pic $\Delta t_U$ pour une surtension équivalente $\Delta U$ de 165 V. On définit un instant final $t_f$ comme étant l'instant où le taux d'endommagement atteint 100%. Une durée écoulée entre les instants ti et $t_f$ définit une durée globale $\Delta T_U$ ; autrement dit $\Delta T_U = t_f - t_i$. La durée globale $\Delta T_U$ est aussi égale, dans les conditions de l'expérience, à soixante-cinq fois la durée d'une demi-période de la tension d'alimentation U.

Plus généralement, à chaque événement de surtension 26 présentant une surtension équivalente $\Delta U$ et une durée de pic $\Delta t_U$, on considère que l'endommagement subi par la varistance 8 au cours de cet événement de surtension 26 est lié à la valeur de cette surtension équivalente $\Delta U$ et à la durée de pic $\Delta t_U$ de cet événement de surtension 26. En particulier, on considère que l'endommagement est proportionnel à la durée de pic $\Delta t_U$ de cet événement de surtension 26. Ainsi, pour une surtension équivalente $\Delta U$ identique, un événement de surtension 26 d'une durée de pic $\Delta t_U$ cause deux fois plus de dommage qu'un événement de surtension 26 de durée de pic $\Delta t_U$ deux fois plus courte.

Autrement dit, pour une surtension équivalente $\Delta U$ de 165 V et pour la varistance 8 considérée, cette varistance 8 présente une durée de vie LT - ou « *lifetime* » en anglais - exprimée en secondes, égale à soixante-cinq fois la durée de pic $\Delta t_U$ d'un événement de surtension 26.

Lorsqu'une tension d'alimentation U présente, au cours de plusieurs demi-périodes successives, des événements de surtension 26 présentant chacun la même surtension équivalente $\Delta U$, on définit une durée de vie LT - ou « *lifetime* » en anglais, exprimée en secondes - d'une varistance 8 comme étant la durée au bout de laquelle l'endommagement subi par cette varistance 8 atteint 100%. Autrement dit la durée de vie LT de la varistance 8 est égale à la durée globale $\Delta T_U$ dans les conditions du test d'endurance.

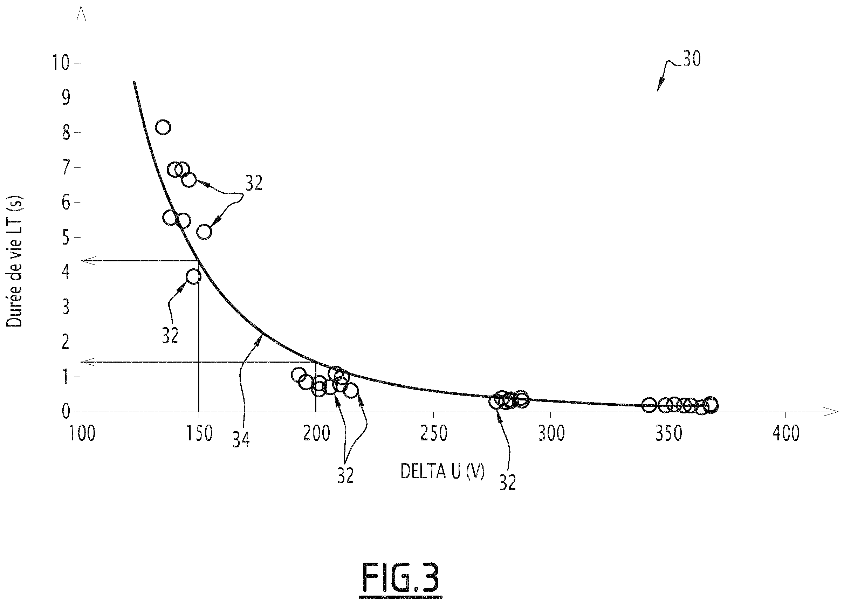

La figure 3 représente un graphe 30 illustrant une synthèse de plusieurs tests d'endurance réalisés sur une varistance 8 d'un modèle donné, c'est-à-dire sur une varistance 8 réalisée en un matériau donné, présentant une géométrie donnée, une tension d'écrêtage Uv donnée, etc. Le test d'endurance décrit ci-dessus est répété plusieurs fois, pour des surtensions équivalentes $\Delta U$ de diverses valeurs, et à chaque fois la durée de vie LT de la varistance 8 est mesurée. Les résultats de chaque test d'endurance sont représentés par des nuages de points 32, tandis qu'une fonction caractéristique LT = $f$ ($\Delta U$) reliant la durée de vie LT et la surtension équivalente $\Delta U$ est déduite des nuages de points 32 avec une méthode numérique, notamment par régression. La fonction caractéristique LT = $f(\Delta U)$ et illustrée par une courbe 34.

En général, la fonction caractéristique relie de manière bijective la durée de vie LT et la surtension équivalente $\Delta U$. Autrement dit, pour une valeur de surtension équivalente $\Delta U$, il n'existe qu'une seule valeur possible de durée de vie LT.

La fonction de régression choisie est ici une fonction polynomiale. Pour le modèle de varistance 8 considéré ici, la durée de vie LT est sensiblement proportionnelle à l'inverse de la surtension élevée à la puissance quatre, soit LT = $f[(\Delta U)^{-4}]$. Autrement dit, l'endommagement est sensiblement proportionnel à la surtension équivalente $\Delta U$ élevée à la puissance quatre, ou $(\Delta U)^4$.

Pour d'autres types de varistance 8, une fonction caractéristique LT = $f(\Delta U)$ différente de l'exemple présenté est envisageable. D'autre part, la fonction caractéristique peut être ajustée pour intégrer un facteur de sécurité. Quel que soit le type de varistance 8, la méthode de test d'endurance présentée ci-dessus reste applicable pour déterminer une fonction caractéristique LT = $f(\Delta U)$ reliant la durée de vie LT et la surtension équivalente $\Delta U$.

À titre d'exemple d'utilisation de la courbe de régression 34, pour le modèle de varistance 8 considéré dans l'exemple de la figure 3, on comprend que pour un événement de surtension 26 présentant une surtension équivalente $\Delta U$ de 150 V, la durée de vie LT de cette varistance 8 est de 4,4 s. Pour une surtension équivalente $\Delta U$ de 200 V, la durée de vie de cette même varistance 8 est de 1,4 s.

On traduit la réduction de durée de vie LT subie par une varistance 8 au cours d'un événement de surtension 26 par un taux d'endommagement $\Delta L_U$, exprimé en pourcentage. Pour un événement 26 présentant une de surtension équivalente $\Delta U$ et d'une durée globale $\Delta T_U$, le taux d'endommagement $\Delta L_U$ est donnée par l'équation suivante : $\Delta L_U$= 100 x $\Delta T_U$ / LT, dans laquelle LT est la durée de vie associée à la surtension équivalente $\Delta U$.

Par exemple, sur la courbe 34 de la figure 3, pour un événement de surtension 26 présentant une surtension équivalente $\Delta U$ de 150 V pendant une durée globale $\Delta T_U$ de 1,1 s, alors le taux d'endommagement $\Delta L_U$ de la varistance 8 est égal à 100 $\times$ 1,1 / 4,4 = 25%.

Lorsqu'une varistance 8 subit plusieurs événements de surtension 26, la surtension équivalente $\Delta U$ de chaque événement de surtension 26 peut varier, et la durée globale $\Delta T_U$ de chaque événement de surtension 26 aussi peut varier. Ainsi le taux d'endommagement $\Delta L_U$ associé à chacun des événements de surtension 26 est a priori variable. Un taux d'endommagement total, notée $\sum \Delta L_U$, est calculé à partir des taux d'endommagement $\Delta L_U$ associés à chacun des événements de surtension 26.

Ici, le taux d'endommagement total $\sum \Delta L_U$ est égal à la somme des taux d'endommagement $\Delta L_U$ associés à chacun des événements 26.

On définit un taux de durée de vie restante RL, ou « *remaining lifetime* » en anglais, exprimée en pourcentage, qui est donné par la formule RL = 100 - $\sum \Delta L_U$. Lorsqu'elle est neuve, la varistance 8 présente donc un taux de durée de vie restante RL égal à 100%.

Lors d'un test d'endurance, la tension d'alimentation U aux bornes de la varistance 8 est imposée, en particulier le pic de tension $V_{PIC}$ et la surtension équivalente $\Delta U$ sont connus. Lorsqu'un dispositif de protection 6 est utilisé dans la réalité pour protéger un appareil 2, la tension aux bornes d'une varistance 8 est par définition écrêtée à la tension d'écrêtage Uv. Il n'est pas possible de mesurer directement $V_{PIC}$ au moyen des capteurs de tension 10.

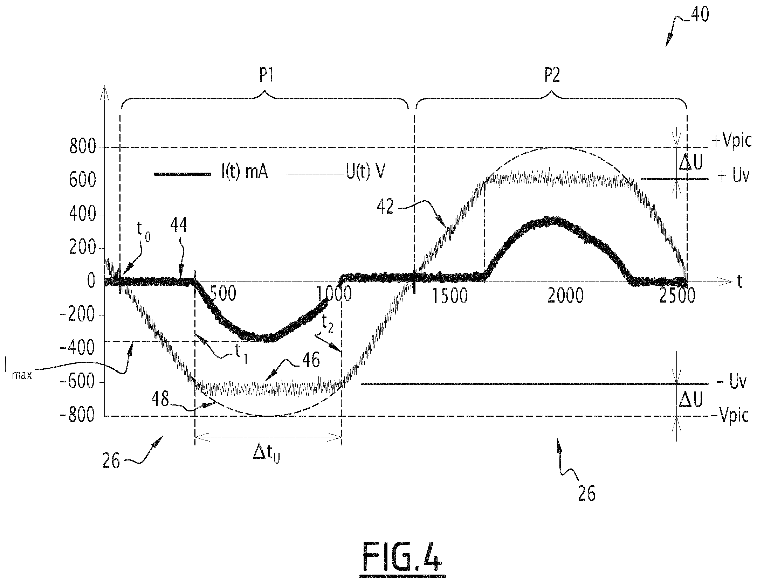

Une méthode de calcul de la surtension équivalente $\Delta U$ est expliquée dans ce qui suit à l'aide de la figure 4, qui représente un graphe 40 comprenant une courbe 42 illustrant l'évolution d'une tension U sinusoïdale de pulsation $\omega$, fournie par une ligne d'alimentation et mesurée aux bornes d'une varistance 8 au cours de deux événements de surtension 26. Le graphe 40 comprend aussi une courbe 44 illustrant l'évolution d'un courant électrique I traversant la varistance 8 pendant les événements de surtension 8.

La courbe 42 est périodique, et comprend deux demi-périodes P1 et P2, un événement de surtension 26 survenant au cours de chaque demi-période P1 ou P2. Les deux événements de surtension 26 représentés sur la figure 4 présentent les mêmes caractéristiques, c'est-à-dire présentent des surtensions équivalentes $\Delta U$ identiques et des durées de pic $\Delta t_U$ identiques. La suite de la description se fait en référence à la première demi-période P1, ce qui est décrit étant transposable à la deuxième demi-période P2.

La demi-période P1 commence à un instant $t_0$, qui est l'instant du dernier zéro du signal de tension U avant l'événement de surtension 26. La courbe 42 de la tension aux bornes de la varistance 8 présente, entre un instant $t_1$ et un instant $t_2$, un plateau 46 au cours duquel la tension U est égale, en valeur absolue, à la tension d'écrêtage Uv. La durée de pic $\Delta t_U$ est égale à t2 - t1 .Le pic de tension $V_{PIC}$, n'est pas atteint, car par définition la tension est écrêtée au niveau de la tension d'écrêtage Uv. Le pic de tension $V_{PIC}$ est donc un pic théorique, représenté par une portion de sinusoïde 48 en pointillés.

Sur la demi-période P1, la courbe 44 du courant I présente une valeur nulle entre les instants $t_0$ et $t_1$, puis entre les instants $t_1$ et $t_2$, c'est-à-dire au cours de l'événement de surtension 26 alors que la tension U est écrêtée, la forme de la courbe 44 est sensiblement celle d'une portion de sinusoïde. Entre les instants $t_1$ et $t_2$, le courant I présente, en valeur absolue, un courant maximum $I_{MAX}$, qui est ici de l'ordre de 400 mA.

Les valeurs absolues du pic de tension $V_{PIC}$ théorique et de la tension d'écrêtage Uv sont reliées par l'équation $Uv = V_{PIC} \cdot \sin[\omega(t_1 - t_0)]$.

Comme par définition $\Delta U = | Uv - V_{PIC} |$, on a aussi l'équation Math 1 ci-dessous :

$$\Delta U = Uv \cdot \left( \frac{1}{\sin[\omega \cdot (t_1 - t_0)]} - 1 \right) \quad [Math\ 1]$$

L'équation Math 1 est un exemple d'équation permettant ainsi de calculer la surtension $\Delta U$ équivalente simplement en connaissant la tension d'écrêtage Uv et en mesurant l'intervalle temporel entre l'instant $t_1$ de début de l'événement de surtension 26 et l'instant $t_0$ du dernier zéro avant l'événement de surtension 26.

En variante, $\Delta U$ peut aussi être calculé par l'équation Math 2 ci-dessous, utilisant la durée de pic $\Delta t_U$ de l'événement de surtension 26 plutôt que les instants $t_0$ et $t_1$ :

$$\Delta U = Uv \cdot \left( \frac{1}{\cos\left[\omega \cdot \frac{\Delta t_U}{2}\right]} - 1 \right) \quad [Math\ 2]$$

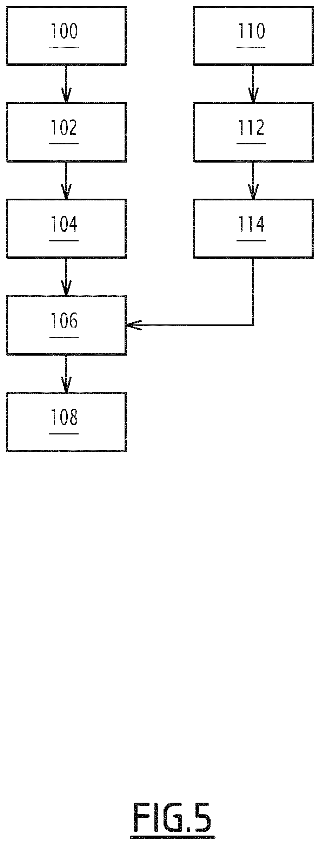

Un procédé de diagnostic du dispositif de protection 6 est à présent décrit en référence à la figure 5.

Au cours d'une étape 100, les capteurs de tension 10 mesurent une tension électrique U associée à la varistance 8, les valeurs de tension électrique étant enregistrées dans le dispositif électronique de supervision 14. Lorsque la tension électrique mesurée dépasse la tension d'écrêtage Uv de la varistance 8, un événement de surtension 26 est détecté. Les instants de début $t_1$ et de fin $t_2$ de l'événement de surtension 26 sont mesurés et enregistrés par le dispositif électronique de supervision 14. La durée de pic $\Delta t_U$ de l'événement de surtension 26 en est ensuite déduite, puis enregistrée. Autrement dit on mesure la durée de pic $\Delta t_U$ de l'événement de surtension 26.

Lorsque plusieurs demi-périodes successives de la tension électrique U présentent chacune un événement de surtension 26 avec une même durée de pic $\Delta t_U$, on mesure aussi la durée globale $\Delta T_U$.

Ensuite, au cours d'une étape 102, on calcule la surtension équivalente $\Delta U$. La surtension équivalente $\Delta U$ est égale à la valeur absolue de la différence entre la tension d'écrêtage Uv et le pic de tension $V_{PIC}$ théorique en l'absence de dispositif de protection. La surtension équivalente $\Delta U$ est ensuite enregistrée dans le dispositif électronique 14.

Avantageusement, le calcul de la surtension équivalente $\Delta U$ est fait au moyen de la formule Math 1.

En variante, au cours de l'étape 102, le calcul de la surtension équivalente $\Delta U$ est fait au moyen de la formule Math 2.

Ensuite, au cours d'une étape 104, on évalue un taux d'endommagement $\Delta L_U$ lié à l'événement de surtension 26 détecté au cours de l'étape 100, à partir des valeurs enregistrées de la surtension équivalente $\Delta U$ et de la durée globale $\Delta T_U$ de l'événement de surtension 26, ainsi qu'à l'aide de la fonction caractéristique LT = $f(\Delta U)$ reliant de manière bijective la durée de vie LT à la surtension équivalente $\Delta U$, la fonction LT = $f(\Delta U)$ étant préalablement enregistrée dans le dispositif électronique de supervision 14.

La fonction caractéristique LT = $f[(\Delta U)]$ est par exemple enregistrée dans le dispositif électronique 14 sous la forme d'une table de données.

Lorsque plusieurs événements de surtensions 26 sont détectés pour une même varistance 8, le procédé comprend une étape 106 consistant à évaluer un taux d'endommagement total $\sum\Delta L_U$ associé à cette varistance 8, puis à en déduire une durée de vie restante RL de la varistance 8.

Dans l'exemple illustré sur la figure 1, la ligne d'alimentation 4 est triphasée, et le dispositif de protection 6 comprenant plusieurs varistances 8, chacune associée à une phase respective L1, L2 ou L3 de la ligne d'alimentation 4. Chacune varistance 8 n'est pas forcément soumises aux mêmes événements de surtension 26 que les autres varistances 8. Chaque varistance 8 présente ainsi une durée de vie restante RL qui lui est propre. La durée de vie restante du dispositif de protection 6 est donc limitée par celle des varistances 8 qui présente la durée de vie RL la plus courte.

Le procédé comprend alors une étape 108 de comparaison 108 de la durée de vie restante RL de chacune des varistances 8. On en déduit une durée de vie restante du dispositif de protection 6 comme étant égale à la plus petite durée de vie restante RL parmi les durées de vie restantes RL respectives des varistances 8.

Dans ce qui précède, le procédé selon l'invention permet d'évaluer la durée de vie restante RL d'une varistance 8 ou d'un dispositif de protection 6 comprenant plusieurs varistances à la suite des événements de surtension 26. Or un dispositif de protection 6 est aussi soumis à des événements de surintensité.

Avantageusement, le dispositif de protection 6 est aussi configuré pour absorber les impulsions de courant survenant au cours des événements de surintensité. Chaque événement de surintensité est caractérisé par une durée d'impulsion $\Delta t_I$ et une intensité de pic $I_{PIC}$. Le procédé de diagnostic selon l'invention comprend des étapes successives 110, 112 et 114, suivies de l'étape d'évaluation 106 du taux d'endommagement total de chaque varistance 8, les étapes 110 à 114 consistant à évaluer un taux d'endommagement $\Delta L_I$, exprimé en pourcentage, associé à chaque événement de surintensité.

À cet égard, le lecteur peut se reporter au document EP-3 217 502-A1, qui décrit un exemple de méthode de diagnostic consistant, à partir d'un signal de courant mesuré avec des capteurs similaires aux capteurs de courant 12, à convertir le signal de courant en signal de tension de manière à détecter un événement de surintensité, évaluer la durée d'impulsion $\Delta t_I$ de cet événement de surintensité et l'intensité de pic $I_{PIC}$, enfin à évaluer le taux d'endommagement $\Delta U_I$ associé à chaque événement de surintensité.

Au cours de l'étape 110, on mesure à l'aide des capteurs de courant 12 un courant électrique traversant la varistance 8. Un événement de surintensité est détecté lorsqu'une impulsion de courant traverse la varistance 8. On mesure alors une durée d'impulsion $\Delta t_I$ de cet événement de surintensité, la durée d'impulsion $\Delta t_I$ étant ensuite enregistrée dans le dispositif électronique de supervision 14.

Ensuite, au cours d'une étape 112, on calcule une valeur de l'intensité de pic $I_{PIC}$, cette valeur d'intensité de pic $I_{PIC}$ étant enregistrée dans le dispositif électronique de supervision 14.

Ensuite, au cours d'une étape 114, on évalue un taux d'endommagement $\Delta L_I$ lié à cet événement de surintensité, à partir des valeurs enregistrées de l'intensité de pic $I_{PIC}$ et de la durée d'impulsion $\Delta t_I$ de l'événement de surintensité, et à l'aide d'une fonction caractéristique, préalablement enregistrée dans le dispositif électronique de supervision 14, reliant l'intensité de pic $I_{PIC}$, la durée d'impulsion $\Delta t_I$ de l'événement de surintensité et la durée de vie LT de la varistance 8. Une telle fonction caractéristique est parfois appelée courbe de déclassement, ou « *derating curve* » en anglais.

Lorsque plusieurs événements de surintensité sont détectés, la somme des taux d'endommagement $\Delta L_I$ liés à chacun des événements de surintensité définit un taux d'endommagement total $\sum\Delta L_I$.

Ensuite, à l'étape d'évaluation 106 du taux d'endommagement total de chaque varistance 8, le dispositif électronique de supervision 14 évalue la durée de vie restante RL de cette varistance 8 en tenant compte des taux d'endommagement $\Delta L_U$ associés à chacun des événements de surtension 26 détectés pour cette varistance 8 et des taux d'endommagement $\Delta L_I$ associés à chacun des événements de surintensité détectés pour cette varistance 8. En particulier, le dispositif électronique de supervision 14 évalue la durée de vie restante RL en tenant compte du taux d'endommagement total $\sum\Delta L_U$ associé aux événements de surtension 26 détectés pour cette varistance 8 et du taux d'endommagement total $\sum\Delta L_I$ associé aux événements de surintensité détectés pour cette varistance 8.,

Par exemple, le dispositif électronique de supervision 14 additionne, pour chaque varistance 8, le taux d'endommagement total $\sum\Delta L_U$ associé aux événements de surtension 26 détectés pour cette varistance 8 et le taux d'endommagement total $\sum\Delta L_I$ associé aux événements de surintensité détectés pour cette varistance 8. La durée de vie restante RL d'une varistance 8 est alors donnée par la formule suivante : $RL = 100 - (\sum\Delta L_U + \sum\Delta L_I)$.

Lorsque la ligne d'alimentation 4 comprend plusieurs phases et que le dispositif de protection 6 comprend plusieurs varistances 8, la durée de vie restante du dispositif de protection 6 est ensuite évaluée au cours de l'étape 108, décrite précédemment, de comparaison 108 de la durée de vie restante RL de chacune des varistances 8. La durée de vie restante du dispositif de protection 6 est égale à la plus petite durée de vie restante RL parmi les durées de vie restantes RL respectives des varistances 8.

Avantageusement, chaque varistance 8 est reçue au sein du dispositif de protection 6 dans un support, non représenté, qui permet de remplacer cette varistance 8 indépendamment des autres varistances 8 de ce dispositif de protection 6. Ainsi, lorsque la durée de vie restante RL d'une des varistances 8 est trop courte, le dispositif électronique de supervision 14 est configuré pour transmettre à un opérateur une alerte indiquant laquelle des varistances 8 est en fin de vie, et seule cette varistance 8 en fin de vie est remplacée, ce qui est économique.

Le procédé de diagnostic selon l'invention prend en compte l'évaluation des endommagements en lien aussi bien avec les événements de surtension 26 qu'avec les événements de surintensité, et ce seulement à partir de mesures de tension et de courant réalisées par les capteurs 10 et 12, ce qui est facile à implémenter.

Dans l'exemple illustré sur la figure 1, le dispositif électronique de supervision 14 est intégré au dispositif de protection 6, c'est-à-dire que le dispositif électronique de supervision, les varistances 8 et les capteurs de tension 10 et de courant 12 sont contenus dans un même boitier du dispositif de protection 6, le dispositif électronique de supervision 14 remplissant avantageusement à la fois les fonctions de mise en œuvre du procédé de diagnostic lié aux surtensions selon l'invention et aux surintensités.

En variante non représentée, le procédé de diagnostic est mis en œuvre par un dispositif électronique spécifique, qui est rajouté à un dispositif de protection existant qui n'est pas configuré pour mettre en œuvre le procédé selon l'invention, par exemple lors d'une opération de maintenance. Un tel dispositif spécifique n'a besoin, pour mettre en œuvre le procédé de diagnostic selon l'invention, que des mesures de tension aux bornes des varistances 8.

Selon une autre variante non représentée, lorsqu'un dispositif de protection 6 comprend un dispositif électronique qui n'est pas configuré pour mettre en œuvre le procédé de diagnostic selon l'invention, si les capteurs de tension aux bornes des varistances 8 sont présents, il est possible de configurer ce dispositif électronique pour qu'il puisse mettre en œuvre le procédé de diagnostic selon l'invention, par exemple en remplaçant physiquement une puce mémoire de ce dispositif électronique ou bien, le cas échéant, en changeant le code informatique ce dispositif électronique. Cela revient à convertir ce dispositif électronique en un dispositif fonctionnellement similaire au dispositif électronique de supervision 14 décrit antérieurement.

Le procédé de diagnostic selon l'invention évalue l'endommagement du dispositif de protection 6 au cours des événements de surtension 26, en utilisant les mesures des capteurs de tension 10.

Selon un premier exemple, au cours de l'étape 100, un événement de surtension 26 est détecté lorsque la tension électrique mesurée dépasse la tension d'écrêtage Uv de la varistance 8. Or lorsque la tension électrique mesurée dépasse la tension d'écrêtage Uv, un courant électrique I, représenté par la courbe 44 sur la figure 4, traverse la varistance 8. Lorsque les capteurs de grandeur électriques du dispositif de protection 6 comprennent des capteurs de courant 12, les instants $t_1$ et $t_2$ peuvent être mesurés à partir des mesures du courant traversant la varistance 8.

En variante non représentée, au cours de l'étape 100, un événement de surtension 26 est détecté lorsque le courant électrique I traversant la varistance 8 est non nul, par exemple supérieur à un seuil de courant dépendant des spécifications de la varistance 8. Ce seuil de courant est par exemple égal à 105% d'un courant de fuite traversant la varistance 8 lorsque la tension est égale à la tension d'écrêtage Uv.

La durée de pic $\Delta t_U$ d'un événement de surtension 26, ainsi que la durée globale $\Delta T_U$, peuvent aussi être mesurées à partir des mesures du courant traversant la varistance 8.

Selon un deuxième exemple, au cours de l'étape 104 le taux d'endommagement $\Delta L_U$ est calculé en utilisant la surtension équivalente $\Delta U$ calculée au cours de l'étape 102. Or l'endommagement subi par une varistance 8 est causé par le courant électrique traversant cette varistance 8. Pour une varistance 8, le courant traversant cette varistance 8 et la tension aux bornes de cette varistance 8 sont reliés l'un à l'autre par une fonction bijective. Au cours d'un événement de surtension 26, le courant maximum $I_{MAX}$ est relié au pic de tension $V_{PIC}$. La surtension équivalente $\Delta U$ est donc reliée au courant maximum $I_{MAX}$.

Ainsi, selon une autre variante non représentée, au cours de l'étape 104 l'endommagement $\Delta L_U$ de la varistance 8 est calculé à partir des mesures du courant traversant la varistance 8, notamment à partir du courant maximum $I_{MAX}$.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Procédé de diagnostic d'un dispositif de protection (6), tel qu'un parafoudre, assurant la protection d'un appareil électrique (2) connecté à une ligne d'alimentation (4), le dispositif de protection comprenant une ou plusieurs varistances (8), chaque varistance étant associée à une phase (L1, L2, L3) respective de la ligne d'alimentation et étant configurée pour limiter les surtensions lorsqu'une tension électrique aux bornes de cette varistance dépasse une tension d'écrêtage (Uv), le dispositif de protection comprenant aussi des capteurs de grandeurs électriques (10, 12), qui mesurent des grandeurs électriques associées à chaque varistance et qui sont reliés à un dispositif électronique de supervision (14),

   **caractérisé en ce que** le procédé comprend, pour au moins une des varistances, des étapes consistant à :

   - mesurer (100) une grandeur électrique associée à cette varistance, détecter un évènement de surtension (26), mesurer une durée globale ($\Delta T_U$) de l'événement de surtension ;
   - calculer (102) une surtension équivalente ($\Delta U$) comme étant la valeur absolue d'une différence entre la tension d'écrêtage (Uv) et un pic de tension ($V_{PIC}$) théorique en l'absence de dispositif de protection, et
   - évaluer (104) un taux d'endommagement ($\Delta L_U$) lié à l'événement de surtension, à partir des valeurs de la surtension équivalente ($\Delta U$) et de la durée globale ($\Delta T_U$) de l'événement de surtension, ainsi qu'à l'aide d'une première fonction caractéristique reliant de manière bijective une durée de vie (LT) de cette varistance (8) à la surtension équivalente, la première fonction caractéristique étant préalablement enregistrée dans le dispositif électronique de supervision (14).

2. Procédé selon la revendication précédente, dans lequel les capteurs de grandeurs électriques du dispositif de protection (6) comprennent des capteurs de tension (10), qui mesurent une tension électrique associée à chaque varistance (8), et dans lequel, à l'étape de mesure (100), on détecte un événement de surtension (26) lorsque la tension électrique dépasse la tension d'écrêtage (Uv).

3. Procédé selon la revendication précédente, dans lequel l'étape de calcul (102) de la surtension équivalente ($\Delta U$) utilise la formule (Math 1) suivante :

$$\Delta U = Uv \cdot \left( \frac{1}{\sin[\omega \cdot (t_1 - t_0)]} - 1 \right)$$

   dans laquelle Uv est la tension d'écrêtage, $\omega$ est une pulsation du signal de tension de la ligne d'alimentation (4), $t_0$ est un instant du dernier zéro du signal de tension avant l'événement de surtension (26) et $t_1$ est un instant de début de l'événement de surtension.

4. Procédé selon l'une quelconque des revendications 1 ou 2, dans lequel, au cours de l'étape de mesure (100) de la grandeur électrique associée à la varistance (8), on mesure une durée de pic ($\Delta t_U$) de l'événement de surtension (26), et dans lequel l'étape de calcul (102) de la surtension équivalente ($\Delta U$) utilise la formule (Math 2) suivante :

$$\Delta U = Uv \cdot \left( \frac{1}{\cos\left[\omega \cdot \frac{\Delta t_U}{2}\right]} - 1 \right)$$

dans laquelle Uv est la tension d'écrêtage et $\omega$ est une pulsation du signal de tension de la ligne d'alimentation (4).

**5.** Procédé selon l'une quelconque des revendications précédentes, dans lequel le procédé de diagnostic comprend une étape qui consiste, lorsque plusieurs événements de surtensions (26) sont détectés pour une même varistance (8), à évaluer (106) un taux d'endommagement total ($\sum\Delta L_U$) associé à cette varistance, le taux d'endommagement total étant calculé à partir des taux d'endommagement ($\Delta L_U$) associés à chacun des événements de surtension (26), et à en déduire une durée de vie restante (RL) de cette varistance.

**6.** Procédé selon la revendication précédente, dans lequel les varistances (8) sont aussi configurées pour absorber des impulsions de courant, les capteurs de grandeur électrique (12) du dispositif de protection (6) comprenant des capteurs de courant (12), qui sont configurés pour mesurer un courant électrique circulant au travers de chaque varistance (8), le procédé de diagnostic comprenant des étapes successives (110, 112, 114), antérieures à l'étape d'évaluation (106) du taux d'endommagement total ($\sum\Delta L_U$) et consistant à, pour chaque varistance :

- mesurer (110) un courant électrique traversant cette varistance et détecter un événement de surintensité, mesurer une durée d'impulsion ($\Delta t_I$) de cet événement de surintensité,
- calculer (112) une valeur d'intensité de pic ($I_{PIC}$),
- évaluer (114) un taux d'endommagement ($\Delta L_I$) lié à cet événement de surintensité, à partir de l'intensité de pic, de la durée d'impulsion de l'événement de surintensité et à l'aide d'une deuxième fonction caractéristique préalablement enregistrée dans le dispositif électronique de supervision, la deuxième fonction caractéristique reliant intensité de pic ($I_{PIC}$), durée d'impulsion ($\Delta t_I$) et durée de vie (LT) de cette varistance (8),

et dans lequel à l'étape d'évaluation (106) du taux d'endommagement total de chaque varistance (8), le dispositif électronique de supervision (14) évalue la durée de vie restante RL de cette varistance en tenant compte du taux d'endommagement total ($\sum\Delta L_U$) associé aux événements de surtension (26) et d'un taux d'endommagement total ($\sum\Delta L_I$) associé aux événements de surintensité détectés pour cette varistance (8).

**7.** Procédé selon l'une quelconque des revendications 5 ou 6, dans lequel la ligne d'alimentation (4) est polyphasée, notamment triphasée, le dispositif de protection (6) comprenant plusieurs varistances (8), chacune associée à une phase respective (L1, L2, L3) de la ligne d'alimentation, et dans lequel le procédé comprend une étape (108) consistant à comparer de la durée de vie restante (RL) de chacune des varistances (8), et à en déduire une durée de vie restante du dispositif de protection (6) comme étant égale à une plus petite durée de vie restante (RL) parmi les durées de vies restantes respectives des varistances (8).

**8.** Dispositif de protection (6) configuré pour assurer la protection d'un appareil électrique (2) connecté à une ligne d'alimentation (4) avec au moins une phase (L1, L2, L3) électrique, le dispositif de protection comprenant, pour chaque phase de la ligne d'alimentation, une varistance (8) configurée pour limiter les surtensions, des capteurs de grandeur électrique (10, 12) pour mesurer des grandeurs électriques associées à chaque varistance et un dispositif électronique de supervision (14) relié aux capteurs de grandeurs électriques, dans lequel le dispositif de protection est configuré pour mettre en œuvre un procédé comprenant les étapes consistant à :

- mesurer (100) une grandeur électrique associée à la varistance, détecter un évènement de surtension (26) et en déduire une durée globale ($\Delta T_U$) de l'événement de surtension ;
- calculer (102) une surtension équivalente ($\Delta U$) comme étant la valeur absolue de la différence entre la tension d'écrêtage (Uv) et le pic de tension ($V_{PIC}$) théorique en l'absence de dispositif de protection, et
- évaluer (104) un taux d'endommagement ($\Delta L_U$) lié à l'événement de surtension, à partir de la surtension équivalente ($\Delta U$) et de la durée globale ($\Delta T_U$) de l'événement de surtension et à l'aide d'une première fonction caractéristique reliant de manière bijective la durée de vie (LT) à la surtension équivalente, la première fonction étant préalablement enregistrée dans le dispositif électronique de supervision.

**9.** Dispositif de protection (6) selon la revendication précédente, dans lequel les varistances (8) sont aussi configurées pour absorber les impulsions de courant, les capteurs de grandeurs électriques du dispositif de protection (6) comprenant aussi des capteurs de courant (12) pour mesurer un courant électrique traversant chaque varistance (8), dans lequel le dispositif de protection (6) est configuré pour mettre en œuvre les étapes consistant à, pour chaque varistance :

- mesurer (110) un courant électrique traversant cette varistance, détecter un événement de surintensité et mesurer une durée d'impulsion ($\Delta t_I$) de cet événement de surintensité,
- calculer (112) une valeur d'intensité de pic ($I_{PIC}$),
- évaluer (114) un taux d'endommagement ($\Delta L_I$) lié à cet événement de surintensité, à partir des valeurs de l'intensité de pic et de la durée d'impulsion de l'événement de surintensité et à l'aide d'une deuxième fonction caractéristique, préalablement enregistrée dans le dispositif électronique de supervision (14), reliant intensité de pic ($I_{PIC}$), durée d'impulsion ($\Delta t_I$) et durée de vie (LT) de la varistance (8).

**10.** Dispositif de protection (6) selon l'une quelconque des revendications 8 ou 9, **caractérisé en ce que** chaque varistance (8) est réalisée en un matériau céramique à base d'oxyde métallique, notamment à base d'oxyde de zinc.

EP 3 944 439 A1

FIG.1

FIG.2

FIG.3

FIG.4

```
┌─────────┐        ┌─────────┐
│   100   │        │   110   │
└────┬────┘        └────┬────┘
     │                  │
     ▼                  ▼
┌─────────┐        ┌─────────┐
│   102   │        │   112   │
└────┬────┘        └────┬────┘
     │                  │
     ▼                  ▼
┌─────────┐        ┌─────────┐
│   104   │        │   114   │
└────┬────┘        └────┬────┘
     │                  │
     ▼                  │
┌─────────┐             │
│   106   │◄────────────┘
└────┬────┘
     │
     ▼
┌─────────┐
│   108   │
└─────────┘
```

FIG.5

Europäisches
Patentamt

European
Patent Office

Office européen
des brevets

# RAPPORT DE RECHERCHE EUROPEENNE

Numéro de la demande

**EP 21 18 6689**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2007/188962 A1 (BALDWIN JOHN R [US]) 16 août 2007 (2007-08-16) | 1,2,5-10 | INV. H02H3/04 |
| A | * alinéas [0031] – [0033], [0043] – [0046]; figures 1-4 * | 3,4 | |
| | ----- | | |
| Y | US 2017/288396 A1 (FRAIMAN EDUARD [CA]) 5 octobre 2017 (2017-10-05) * alinéas [0024] – [0037]; figures 3a, 3b, 4 * | 1,2,5,6, 8-10 | |
| | ----- | | |
| Y | JP H04 308678 A (TOSHIBA CORP) 30 octobre 1992 (1992-10-30) * alinéas [0012] – [0013]; figures 1,5 * | 7 | |
| | ----- | | |
| A | US 5 914 662 A (BURLEIGH ROGER S [US]) 22 juin 1999 (1999-06-22) * colonnes 7, 8; figures 2,3 * | 3,4 | |
| | ----- | | |

**DOMAINES TECHNIQUES RECHERCHES (IPC)**

**H02H**

Le présent rapport a été établi pour toutes les revendications

| Lieu de la recherche | Date d'achèvement de la recherche | Examinateur |
|---|---|---|
| **Munich** | **6 décembre 2021** | **Colombo, Alessandro** |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 18 6689

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-12-2021

| Document brevet cité au rapport de recherche | | Date de publication | Membre(s) de la famille de brevet(s) | | Date de publication |
|---|---|---|---|---|---|
| US 2007188962 | A1 | 16-08-2007 | CA | 2577639 A1 | 15-08-2007 |
| | | | US | 2007188962 A1 | 16-08-2007 |
| US 2017288396 | A1 | 05-10-2017 | CA | 2963999 A1 | 14-04-2016 |
| | | | EP | 3218979 A1 | 20-09-2017 |
| | | | US | 2017288396 A1 | 05-10-2017 |
| | | | WO | 2016054719 A1 | 14-04-2016 |
| JP H04308678 | A | 30-10-1992 | AUCUN | | |
| US 5914662 | A | 22-06-1999 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3217502 A1

- US 2007188962 A1